# EUROPÄISCHE PATENTSCHRIFT

(11) **EP 1 264 758 B1**
(45) Veröffentlichungstag und Bekanntmachung des Hinweises auf die Patenterteilung: **29.09.2004**
(21) Anmeldenummer: 02011126.6
(22) Anmeldetag: 18.05.2002
(51) Int. Cl.: B62D 25/04

(54) **Einrichtung zum Erhöhen der Festigkeit eines Hohlformteiles einer Fahrzeugkarosserie**
Device for increasing the strength of hollow section member of a vehicle body
Dispositif pour augmenter la résistance d'un profilé creux à une carrosserie de véhicule

(30) Priorität: 30.05.2001 DE 10126183
(43) Veröffentlichungstag der Anmeldung: 11.12.2002
(73) Patentinhaber: Wilhelm Karmann GmbH, D-49084 Osnabrück (DE)
(72) Erfinder: Dogan, Hamdi, 49082 Osnabrück (DE); Wess, Rainer, 49090 Osnabrück (DE); Exner, Markus, 49491 Belm (DE)

(56) Entgegenhaltungen:
- DE-A- 19 710 894

## Beschreibung

Die Erfindung betrifft eine Einrichtung zum Erhöhen der Festigkeit eines mit geschlossenem Querschnitt ausgebildeten Hohlformteiles einer Fahrzeugkarosserie nach der im Oberbegriff des Patentanspruches 1 näher definierten Art. So ein Hohlformteil ist aus DE 197 10 894 A1 bekannt.

Aus der DE 195 18 946 A1 ist ein Fahrzeug-Strukturbauteil bzw. ein Hohlformteil mit geschlossenem Querschnitt bekannt, das aus mindestens zwei miteinander verbundenen Bauteilen gebildet ist. Das Fahrzeug-Strukturbauteil stellt eine Vordersäule bzw. eine A-Säule einer Fahrzeugkarosserie dar, das aus einer Außenplatte, einer Säulenversteifung und einer Innensäule aus Leichtmetall gebildet ist. Zur Versteifung des Fahrzeug-Strukturbauteils ist ein aus Leichtmetallextrudat hergestelltes Verstärkungselement vorgesehen, welches eine im wesentlichen gleiche äußere Form aufweist wie eine innere Form des geschlossenen Querschnitts des Fahrzeug-Strukturbauteils, wobei das Verstärkungselement innerhalb des Bereichs des geschlossenen Querschnittes des Fahrzeug-Strukturbauteils angeordnet ist.

Zur weiteren Erhöhung der Festigkeit des Fahrzeug-Strukturbauteils ist es vorgesehen, mehrere Eisenelemente, wie beispielsweise eine Stahlröhre und eine Stahlplatte oder ähnliches, entlang des hohlen Bereiches des Verstärkungselementes anzubringen.

Nachteilig dabei ist jedoch, daß das Fahrzeug-Strukturbauteil aus mehreren Einzelteilen gebildet ist, welche bei der Fertigung vorgehalten werden müssen und in verschiedenen Fertigungsschritten miteinander verbunden werden. Dies führt nachteilhafterweise zu einem komplizierten und kostenintensiven Fertigungsprozeß.

Darüber hinaus ist von Nachteil, daß das bekannte Fahrzeug-Strukturelement aufgrund des komplizierten mehrteiligen Aufbaues ein hohes Gesamtgewicht aufweist, was den Bestrebungen im Automobilbau, den Kraftstoffverbrauch eines Automobiles durch Reduzierung des Fahrzeuggewichtes zu verringern, entgegenwirkt.

Zusätzlich weist das bekannte Fahrzeug-Strukturbauteil den Nachteil auf, daß das in dem Innenraum des Fahrzeug-Strukturbauteiles vorgesehene Verstärkungselement nur geringe Fertigungstoleranzen aufweisen darf, um ein problemloses Einpassen des Verstärkungselementes in den Innenraum des Fahrzeug-Strukturelementes zu gewährleisten.

Aufgabe der vorliegenden Erfindung ist es daher, eine Einrichtung zum Erhöhen der Festigkeit eines mit geschlossenem Querschnitt ausgebildeten Hohlformteiles einer Fahrzeugkarosserie zur Verfügung zu stellen, die die Herstellung einer Fahrzeugkarosserie mit einer hohen Steifigkeit bei geringerem Gesamtgewicht ermöglicht und nur geringe Herstellkosten verursacht.

Erfindungsgemäß wird diese Aufgabe mit einer Einrichtung zum Erhöhen der Festigkeit eines Hohlformteiles einer Fahrzeugkarosserie mit den Merkmalen des Patentanspruches 1 gelöst.

Dadurch, daß die erfindungsgemäße Einrichtung ein wenigstens teilweise in einem Innenraum des Hohlformteiles angeordnetes Versteifungselement aufweist, das mit dem Hohlformteil verbunden ist und sich durch eine Aussparung des Hohlformteiles in dessen Innenraum erstreckt, wird in vorteilhafter Weise eine einfache Montage bzw. Fertigung eines entsprechend ausgestatteten Fahrzeug-Strukturbauteiles ermöglicht, was zu geringen Herstellkosten führt.

Darüber hinaus weist die erfindungsgemäße Einrichtung den Vorteil auf, daß ein Hohlformteil einer Fahrzeugkarosserie, welches mit der erfindungsgemäßen Einrichtung versehen ist, eine hohe Bauteilsteifigkeit bei geringem Eigengewicht aufweist, da das Hohlformteil nach dessen Herstellung mit einem einfach gestalteten Verstärkungselement versehen wird, das durch die Aussparung in den Innenraum eingeführt wird und mit dem Hohlformteil fest verbunden wird.

Eine besonders kostengünstige Herstellung eines Hohlformteiles einer Fahrzeugkarosserie wird dann erreicht, wenn das Hohlformteil als ein einstückiges, durch Innenhochdruckumformen hergestelltes Bauteil ausgebildet ist, das mit dem Verstärkungselement versehen ist. Dies wird dadurch erreicht, daß ein Hohlformteil einer Fahrzeugkarosserie, wie beispielsweise eine A-Säule, mit an spezielle Bauraumerfordernisse und Steifigkeitsanforderungen örtlich angepaßten Querschnitten in einem Fertigungsschritt hergestellt werden kann und in besonders hoch beanspruchten Bereichen in der vorbeschriebenen einfachen Art und Weise mit einem Verstärkungselement versehen werden kann.

Weitere Vorteile und vorteilhafte Ausgestaltungen des Gegenstandes nach der Erfindung ergeben sich aus den Patentansprüchen und den nachfolgend anhand der Zeichnung prinzipmäßig beschriebenen Ausführungsbeispielen. Im folgenden soll die Erfindung anhand der Zeichnung näher erläutert werden.

Darin zeigt:
- Fig. 1: eine vereinfachte dreidimensionale Darstellung einer Karosserie eines Cabriolet;
- Fig. 2: eine schematisierte dreidimensionale Darstellung eines Fahrzeug-Strukturbauteils in Alleinstellung;
- Fig. 3: eine schematisierte Darstellung des Strukturbauteiles einer Fahrzeugkarosserie gemäß Fig. 2;
- Fig. 4: eine Querschnittsdarstellung des Fahrzeug-Strukturbauteiles entlang der Linie IV-IV aus Fig. 3;
- Fig. 5: eine Querschnittsdarstellung des Fahrzeug-Strukturbauteiles gemäß Fig. 3 entlang der Linie IV-IV, wobei eine zu Fig. 4 abweichende Ausführungsform der Anordnung des Verstärkungselementes gezeigt ist;
- Fig. 6: eine weitere Querschnittsdarstellung entlang der Linie IV-IV aus Fig. 3, wobei eine weitere von Fig. 3 abweichende Ausführungsform des Hohlformteiles dargestellt ist;
- Fig. 7: eine Querschnittsdarstellung des Fahrzeug-Strukturbauteiles gemäß Fig. 3 entlang der Linie VII-VII nach Fig. 3; und
- Fig. 8: eine weitere Querschnittsdarstellung des Fahrzeug-Strukturbauteiles gemäß Fig. 3 entlang der Linie VIII-VIII, wobei das Verstärkungselement mit einer Einrichtung zur Positionierung und/oder Anbindung des Hohlformteiles an der Fahrzeugkarosserie versehen ist.

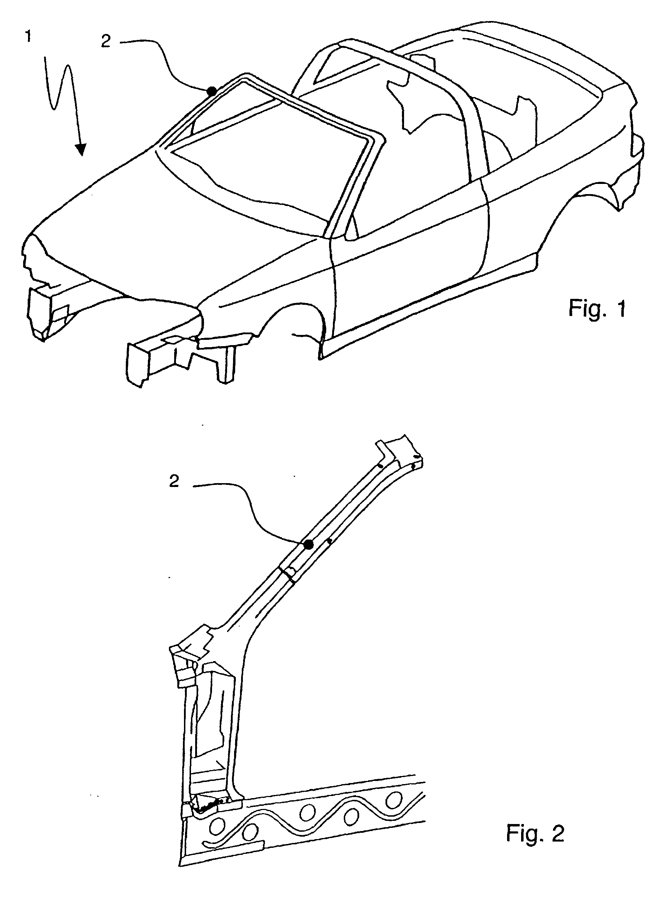

Fig. 1 zeigt eine Fahrzeugkarosserie 1 eines Cabriolets, welches Fahrzeug-Strukturbauteile, die als Hohlformteile ausgebildet sind, aufweist. Exemplarisch wird die Erfindung an einem Hohlformteil 2, welches eine A-Säule der Fahrzeugkarosserie 1 darstellt und in Fig. 2 in Alleinstellung gezeigt ist, erläutert.

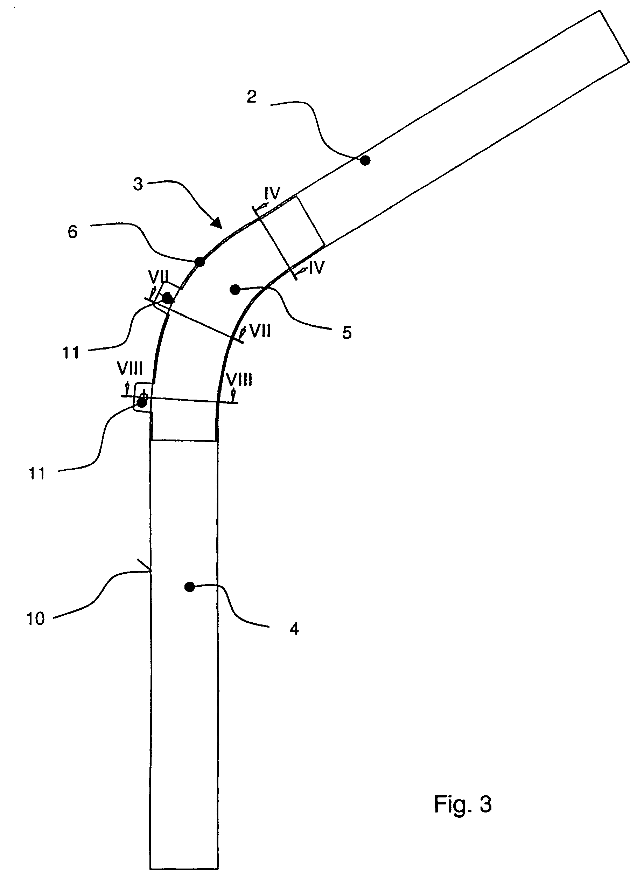

Das Fahrzeug-Strukturbauteil 2 ist in Fig. 3 in stark schematisierter Darstellung in einer Schnittdarstellung gezeigt, wobei das Fahrzeug-Strukturbauteil bzw. das Hohlformteil 2 mit geschlossenem Querschnitt ausgebildet ist und mit einer Einrichtung 3 zum Erhöhen der Festigkeit des Hohlformteiles 2 versehen ist. Die Einrichtung 3 ist mit einem sich in einen Innenraum 4 des Hohlformteiles 2 erstreckenden Verstärkungselement 5 versehen, welches fest mit dem Hohlformteil 2 verbunden ist.

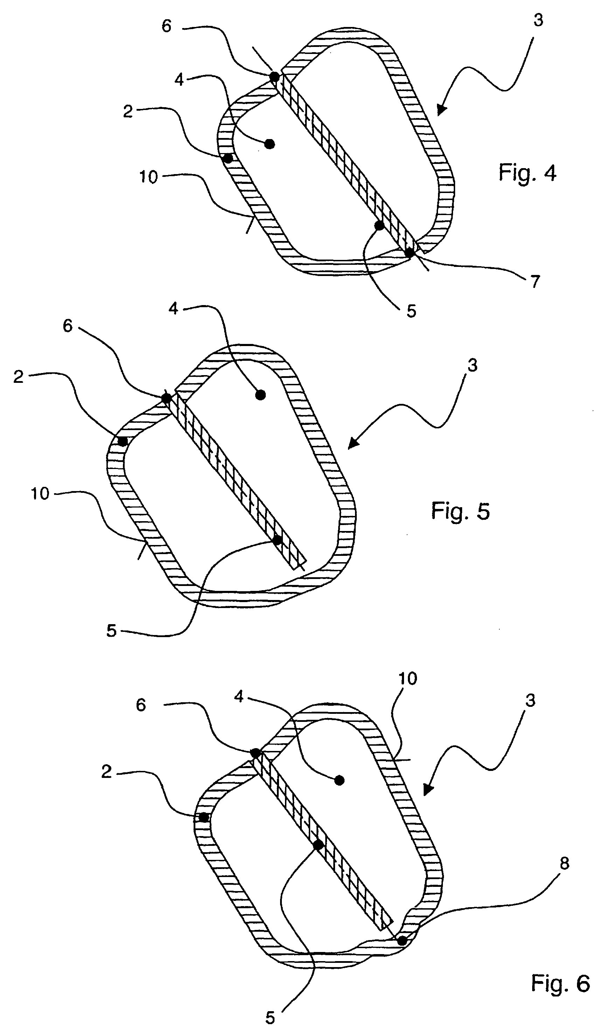

Das Verstärkungselement 5 ist durch eine der Stärke, Größe und Form des Verstärkungselementes 5 entsprechende, in den Fig. 4 bis Fig. 8 näher dargestellte Aussparung 6 bzw. 7 des Hohlformteiles 2 in den Innenraum 4 des Hohlformteils 2 eingeführt, so daß das Verstärkungselement 5 in den Innenraum 4 wenigstens hineinragt.

In den nachfolgend beschriebenen Fig. 4 bis Fig. 8 sind funktionsgleiche Bauelemente aus Gründen der Übersichtlichkeit mit gleichen Bezugszeichen bezeichnet.

In Fig. 4 ist das Hohlformteil 2 in einem Querschnitt entlang der Linie IV-IV aus Fig. 3 gezeigt, wobei das Verstärkungselement 5 im Querschnitt ein I-Profil aufweist und mit seinem der schlitzartigen Aussprung 6 abgewandten Ende in eine zweite Aussparung 7, welche an dem Hohlformteil 2 etwa gegenüberliegend der ersten Aussparung 6 angeordnet ist, eingreift und dort gehalten wird.

Die Aussparungen 6 und 7 werden durch konventionelle Verfahren, wie beispielsweise Sägen oder auch durch Laserschneiden in das Fahrzeug-Strukturbauteil 2 eingebracht.

Das Verstärkungselement 5 bildet somit einen Mittelsteg des Hohlformteiles 2 aus, der jeweils in den Bereichen der Aussparungen 6, 7 mit dem Hohlformteil 2 fest verbunden ist.

Fig. 5 zeigt eine weitere Ausführungsform der Einrichtung 3, wobei das Hohlformteil 2 lediglich mit der Aussparung 6 zum Einführen des Verstärkungselementes 5 in den Innenraum 4 des Fahrzeug-Strukturbauteils 2 versehen ist. Das der Aussparung 6 abgewandte Ende des Verstärkungselementes 5 ist zu der wandung des Hohlformteiles 2 beabstandet angeordnet.

Eine weitere Ausführungsform der Einrichtung 3 ist in Fig. 6 gezeigt, bei der das im Querschnitt entlang der Linie IV-IV aus Fig. 3 dargestellte Hohlformteil 2 auf der der Aussparung 6 abgewandten Seite des Verstärkungselementes 5 mit einer eine Zentrierkontur 8 darstellenden Auswölbung versehen ist, wobei das Verstärkungselement 5 mit einem Ende in die Auswölbung der Zentrierkontur 8 des Hohlformteiles 2 hineinragt. Bei einer crashbedingten Verformung des Hohlformteils 2 wird das Verstärkungselement 5 innerhalb dieser Auswölbung aufgenommen und zentriert, so daß ein unkontrolliertes Auslenken oder Knicken vermieden oder wenigstens vermindert wird, wodurch die Steifigkeit des Hohlformteiles 2 und somit der Fahrzeugkarosserie 1 auch im Crashfall ein gewünscht hohes Niveau aufweist.

In einer nicht näher dargestellten Ausführungsform der Einrichtung 3 kann es vorgesehen sein, daß das Hohlformteil 2 auf der der Aussparung 6 abgewandten Seite jeweils alternierend oder in beliebiger Anordnung mit der weiteren Aussparung 7 und mit der Zentrierkontur 8 ausgebildet ist, wobei das Verstärkungselement in Abhängigkeit des jeweilig vorliegenden Anwendungsfalles im Bereich der sich lediglich abschnittsweise erstrekkenden Aussparung 7 mit dem Hohlformteil 2 fest verbunden ist oder nicht.

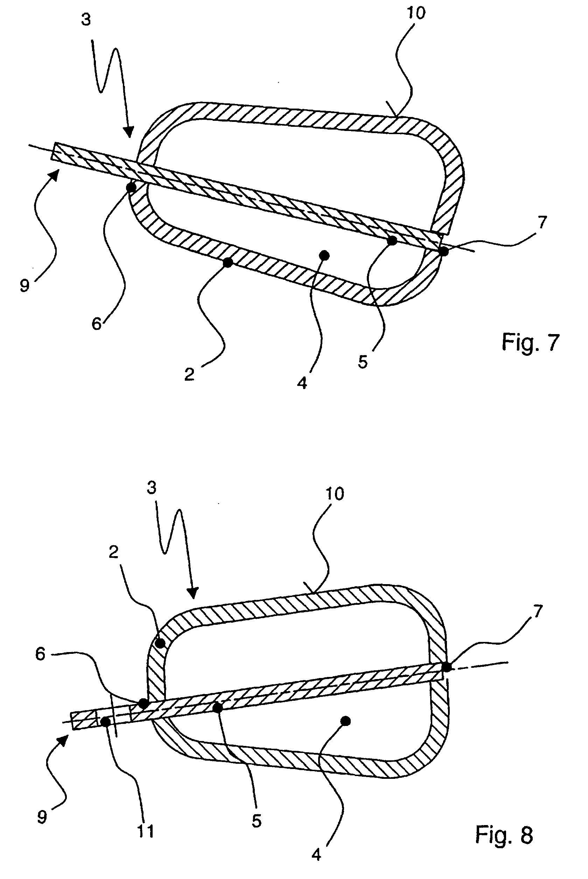

In den Fig. 7 und 8 ist eine weitere Ausführungsform der Einrichtung 3 im Querschnitt entlang der Linien VII-VII und VIII-VIII aus Fig. 3 dargestellt, wobei das Verstärkungselement 5 jeweils mit einer Einrichtung 9 zur Karosserieanbindung und zum Positionieren des Verstärkungselementes 5 versehen ist. Das Verstärkungselement 5 überragt dabei mit einem Ende im Bereich der Aussparung 6 eine Außenseite 10 des Hohlformteiles 2 und bildet an diesem Ende die Einrichtung 9 zur Positionierung und Karosserieanbindung aus.

Ist das Hohlformteil 2 mit zwei Aussparungen 6, 7 ausgebildet, liegt es selbstverständlich im Ermessen des Fachmannes, das Verstärkungselement 5 derart auszubilden, daß dieses abweichend von den vorbeschriebenen Ausführungsbeispielen im Bereich der weiteren Aussparung 7 derart aus dem Innenraum 4 des Hohlformteiles 2 hervorsteht, daß dort eine weitere Einrichtung zum _{P}ositionieren und Anbinden des Verstärkungselementes 5 und damit des Fahrzeug-Strukturbauteiles 2 an der Fahrzeugkarosserie 1 anordenbar ist, welche gegebenenfalls auch anstelle der Einrichtung 9 treten kann.

Die Einrichtung 9 zur Positionierung und Karosserieanbindung ist bevorzugt als eine Lasche ausgeführt, die außerhalb des Hohlformteiles bzw. der A-Säule 2 verbleibt. Die Lasche 9 ist mit Bohrungen 11 versehen und kann gegebenenfalls auch zur Befestigung von weiteren Bauteilen im Fahrzeug, wie beispielsweise Schläuchen, Kabeln und dergleichen, verwendet werden.

Das Hohlformteil 2 der vorbeschriebenen Ausführungsbeispiele ist als ein einstückiges, durch Innenhochdruckumformen hergestelltes Bauteil ausgebildet, welches einen den speziellen Bauraumerfordernissen und den Steifigkeitsanforderungen der Fahrzeugkarosserie 1 lokal angepaßten variablen Querschnitt aufweist.

Das Verstärkungselement 5 ist jeweils über ein thermisches Verbindungsverfahren, wie beispielsweise Schweißen oder Löten, mit dem Hohlformteil 2 im Bereich der Aussparung 6 fest verbunden.

Darüber hinaus liegt es im Ermessen des Fachmannes in Abhängigkeit des jeweilig vorliegenden Anwendungsfalles, zwischen dem Verstärkungselement 5 und dem Hohlformteil 2 im Bereich der weiteren Aussparung 7 ebenfalls eine feste Verbindung vorzusehen.

Hiervon abweichend kann es auch vorgesehen sein, die feste Verbindung zwischen dem Hohlformteil 2 und dem Verstärkungselement 5 im Bereich der Aussparung 6 bzw. 7 über eine mechanische Verbindung, wie beispielsweise Verklemmen, Verprägen oder Verquetschen, auszubilden. Alternativ kann es auch vorgesehen sein, daß die feste Verbindung aus einer Kombination eines thermischen Verbindungsverfahrens und einer mechanischen Verbindung hergestellt wird.

Das Verstärkungselement 5 wird in hochbelasteten Bereichen des Hohlformteiles 2, vorzugsweise in Bereichen, in welchen das Hohlformteil 2 eine Knickstelle bzw. eine Biegung aufweist, angeordnet, wobei eine Erhöhung der Festigkeit des Hohlformteils 2 auch nur in den Bereichen vorgenommen werden kann, wo es erforderlich ist.

So kann es vorgesehen sein, daß in Längsrichtung des Hohlformteiles 2 mehrere Verstärkungselemente vorgesehen sind, so daß das Hohlformteil 1 2 lediglich in den hochbelasteten Bereichen mit einem Verstärkungselement 5 versehen ist und die weniger stark belasteten Bereiche frei bleiben, womit eine weitere Gewichtsreduzierung erzielt wird.

Darüber hinaus kann es zur Einsparung von Material und damit auch zur Reduktion des Gewichts des Fahrzeug-Strukturbauteiles 2 vorgesehen sein, daß sich das Verstärkungselement 5 in nicht näher dargestellter Art und Weise an seinen in Längsrichtung des Verstärkungselementes 5 freien Enden im Innenraum 4 des Hohlformteiles 2 rautenartig verjüngt, und daß das Verstärkungselement 5 den Innenraum 4 des Hohlformteiles 2 nicht über seine gesamte Länge vollständig durchdringt.

Um eine besonders effektive Versteifung des Hohlformteiles 2 zu erreichen, ist das Verstärkungselement 5 in dem Innenraum 4 des Hohlformteiles 2 derart angeordnet bzw. ist seine Orientierung in dem Hohlformteil 2 derart vorgesehen, daß das in Abhängigkeit des gewählten Profiles stehende maximale Widerstandsmoment des Verstärkungselementes 5 der maximalen Beanspruchung des Hohlformteiles 2 entgegenwirkt.

Mit der vorbeschriebenen Einrichtung 3 wird bei der gezeigten Anwendung eine Knicksteifigkeit einer A-Säule insbesondere im Bereich des Knickes bzw. dem Spiegeldreieck einer Fahrzeugkarosserie dadurch erhöht, daß in die A-Säule ein einfach gestaltetes Verstärkungselement 5 bzw. ein Mittelsteg zur Verstärkung eingearbeitet wird.

Die vorbeschriebene Ausgestaltung eines Fahrzeug-Strukturbauteiles mit einem Verstärkungselement weist gegenüber konventionellen Verstärkungen bei mindestens gleicher Knicksteifigkeit ein wesentlich verringertes Gewicht auf. Darüber hinaus wird auch eine Verminderung der Membranwirkung, das Einbeulen der Außenflächen des Hohlformteils 2 insbesondere bei Vorliegen einer Biegebelastung, erzielt.

Die Einrichtung zum Erhöhen der Festigkeit eines mit geschlossenem Querschnitt ausgebildeten Hohlformteiles einer Fahrzeugkarosserie kann selbstverständlich für alle crashbeanspruchten Bereiche mit geschlossenen Hohlprofilen sowie für Bauteile einer Fahrzeugkarosserie, die auf Festigkeit beansprucht werden, wie z.B. Sicherheitsgurtanbindungen, Anwendung finden. Weitere Anwendungsfälle stellen auch steifigkeitsbeanspruchte Bereiche der Fahrzeugkarosserie, wie z.B. auf Torsion beanspruchte Säulenknoten sowie Längsträger, die einer Biegebeanspruchung ausgesetzt sind, dar.

### Bezugszeichen

- 1: Fahrzeugkarosserie
- 2: Fahrzeug-Strukturbauteil, Hohlformteil
- 3: Einrichtung zur Erhöhung der Festigkeit
- 4: Innenraum
- 5: Verstärkungselement, Mittelsteg
- 6: Aussparung, Schlitz
- 7: weitere Aussparung
- 8: Zentrierkontur, Auswölbung
- 9: Einrichtung zur Positionierung und/oder Karosserieanbindung, Lasche
- 10: Außenseite des Hohlformteils

## Patentansprüche

1. Hohlformteil (2) einer Fahrzeugkarosserie (1) mit geschlossenem Querschnitt, welches mit einer Einrichtung (3) zum Erhöhen der Festigkeit ausgeführt ist, wobei die Einrichtung (3) mindestens ein wenigstens teilweise in einem Innenraum (4) des Hohlformteiles (2) angeordnetes Verstärkungselement (5) aufweist, das mit dem Hohlformteil (2) verbunden ist und das sich durch eine Aussparung (6, 7) des Hohlformteiles (2) in dessen Innenraum (4) erstreckt,
**dadurch gekennzeichnet,**
**dass** das Hohlformteil (2) als ein einstückiges, durch Innenhochdruckumformen hergestelltes Bauteil ausgebildet ist.

2. Hohlformteil mit Verstärkungselement nach Anspruch 1,
**dadurch gekennzeichnet,**
**dass** sich das Verstärkungselement (5) in Längsrichtung wenigstens abschnittsweise über die Länge des Hohlformteiles (2) erstreckt.

3. Hohlformteil mit Verstärkungselement nach Anspruch 1 oder 2,
**dadurch gekennzeichnet,**
**dass** das Verstärkungselement (5) in wenigstens einem hochbelasteten Bereich des Hohlformteiles (2), vorzugsweise in einem Bereich, in welchem das Hohlformteil (2) eine Knickstelle aufweist, vorgesehen ist.

4. Hohlformteil mit Verstärkungselement nach einem der Ansprüche 1 bis 3,
**dadurch gekennzeichnet,**
**dass** das Verstärkungselement (5) über ein thermisches Verbindungsverfahren und/oder über eine mechanische Verbindung mit dem Hohlformteil (2) verbunden ist.

5. Hohlformteil mit Verstärkungselement nach einem der Ansprüche 1 bis 4,
**dadurch gekennzeichnet,**
**dass** das Verstärkungselement (5) mit einem Ende im Bereich der Aussparung (6) eine Außenseite (10) des Hohlformteiles (2) überragt und an diesem Ende eine Einrichtung (9) zur Positionierung und/oder Karosserieanbindung aufweist.

6. Hohlformteil mit Verstärkungselement nach einem der Ansprüche 1 bis 5,
**dadurch gekennzeichnet,**
**dass** das Verstärkungselement (5) mit einem freien Ende in den Innenraum (4) des Hohlformteiles (2) ragt.

7. Hohlformteil mit Verstärkungselement nach einem der Ansprüche 1 bis 6,
**dadurch gekennzeichnet,**
**dass** das Hohlformteil (2) in Längsrichtung wenigstens abschnittsweise im Bereich des im Innenraum (4) angeordneten Endes des Verstärkungselementes (5) mit einer Zentrierkontur (8) ausgebildet ist.

8. Hohlformteil mit Verstärkungselement nach einem der Ansprüche 1 bis 5,
**dadurch gekennzeichnet,**
**dass** das Hohlformteil (2) mit einer zweiten Aussparung (7) versehen ist, welche das sich in den Innenraum (4) des Hohlformteiles (2) erstreckende Verstärkungselement (5) wenigstens abschnittsweise durchtritt.

9. Hohlformteil mit Verstärkungselement nach einem der Ansprüche 1 bis 9,
**dadurch gekennzeichnet,**
**dass** das Verstärkungselement (5) derart in dem Hohlformteil (2) angeordnet ist, daß das maximale Widerstandsmoment des Verstärkungselementes (5) der maximalen Beanspruchung des Hohlformteiles (2) entgegenwirkt.

10. Hohlformteil mit Verstärkungselement nach einem der Ansprüche 1 bis 9,
**dadurch gekennzeichnet,**
**dass** das Verstärkungselement (5) vorzugsweise im Querschnitt ein I-Profil aufweist und wenigstens annähernd einen Mittelsteg des Hohlformteiles (2) ausbildet.

11. Hohlformteil mit Verstärkungselement nach einem der Ansprüche 1 bis 10,
**dadurch gekennzeichnet,**
**dass** in Längsrichtung des Hohlformteiles (2) mehrere Verstärkungselemente (5) vorgesehen sind. mit Verstärhungselement

## Claims

1. A hollow shaped part (2) with a closed cross-section for a vehicle body (1) provided with a device (3) for increasing strength, comprising at least one reinforcing element (5) arranged at least in part in an inner space (4) of said hollow shaped part (2), said reinforcing element (5) connected with the hollow shaped part (2) and extending through an aperture (6, 7) of said hollow shaped part (2) into said inner space (4) thereof, **characterized in that** said hollow shaped part (2) is formed as a one-piece component produced by an inner high pressure molding.

2. A hollow shaped part with reinforcing element according to claim 1, **characterized in that** said reinforcing element (5) extends longitudinally at least sectionwise over the length of said hollow shaped part (2).

3. A hollow shaped part with reinforcing element according to claim 1 or 2, **characterized in that** said reinforcing element (5) is provided in at least one highly stressed portion of said hollow shaped part (2), preferably in a portion in which said hollow shaped part (2) is angled.

4. A hollow shaped part with reinforcing element according to one of the claims 1 to 3, **characterized in that** said reinforcing element (5) is connected by a thermal connecting method and/or by mechanical connecting means to said hollow shaped part (2).

5. A hollow shaped part with reinforcing element according to one of the claims 1 to 4, **characterized in that** said reinforcing element (5) protrudes by one end in the region of said aperture (6) beyond an outer side (10) of said hollow shaped part (2) and comprises at said end a device (9) for positioning and/or joining to said vehicle body.

6. A hollow shaped part with reinforcing element according to one of the claims 1 to 5, **characterized in that** said reinforcing element (5) protrudes by a free end into said inner space (4) of said hollow shaped part (2).

7. A hollow shaped part with reinforcing element according to one of the claims 1 to 6, **characterized in that** said hollow shaped part (2) is formed with a centering contour (8) longitudinally at least sectionwise in the region of the end of said reinforcing element (5) arranged in said inner space (4).

8. A hollow shaped part with reinforcing element according to one of the claims 1 to 5, **characterized in that** said hollow shaped part (2) is provided with a second aperture (7) which passes, at least sectionwise, through said reinforcing element (5) extending into said inner space (4) of said hollow shaped part (2).

9. A hollow shaped part with reinforcing element according to one of the claims 1 to 9, **characterized in that** said reinforcing element (5) is arranged in said hollow shaped part (2) such that the maximum resistive moment of said reinforcing element (5) counteracts the maximum stress of said hollow shaped part (2).

10. A hollow shaped part with reinforcing element according to one of the claims 1 to 9, **characterized in that** said reinforcing element (5) comprises preferably cross-sectionally an I-profile and forms at least approximately a center web of said hollow shaped part (2).

11. A hollow shaped part with reinforcing element according to one of the claims 1 to 10, **characterized in that** several reinforcing elements (5) are provided in the longitudinal direction of said hollow shaped part (2).

## Revendications

1. Profilé creux moulé (2) à section fermée pour carrosserie de véhicule (1), réalisé avec un dispositif (3) pour augmenter la résistance, le dispositif (3) présentant au moins une armature (5) disposée au moins partiellement dans un espace intérieur (4) du profilé creux moulé (2), qui est relié au profilé creux moulé (2) et qui s'étend dans l'espace intérieur (4) de celui-ci par un évidement (6,7), **caractérisé en ce que** le profilé creux moulé (2) est conformé d'une seule pièce par hydroformage en tant que composant.

2. Profilé creux moulé et son armature selon la revendication 1, **caractérisé en ce que** l'armature (5) s'étend en direction longitudinale au moins par zones sur la longueur du profilé creux moulé (2).

3. Profilé creux moulé et son armature selon la revendication 1 ou 2, **caractérisé en ce que** l'on prévoit l'armature (5) dans au moins une zone fortement chargée du profilé creux moulé (2), de préférence dans une zone dans laquelle le profilé creux moulé (2) présente un point d'inflexion.

4. Profilé creux moulé et son armature selon l'une quelconque des revendications 1 à 3, **caractérisé en ce que** l'armature (5) est reliée au profilé creux moulé (2) par un procédé de liaison thermique et/ou une liaison mécanique.

5. Profilé creux moulé et son armature selon l'une quelconque des revendications 1 à 4, **caractérisé en ce que** l'armature (5) fait saillie par une extrémité d'une face extérieure (10) du profilé creux moulé (2) dans la zone de l'évidement (6) et **en ce qu'**il présente à cette extrémité un dispositif (9) de positionnement et/ou de liaison à la carrosserie.

6. Profilé creux moulé et son armature selon l'une quelconque des revendications 1 à 5, **caractérisé en ce que** l'armature (5) fait saillie par une extrémité libre dans l'espace intérieur (4) du profilé creux moulé (2).

7. Profilé creux moulé et son armature selon l'une quelconque des revendications 1 à 6, **caractérisé en ce que** le profilé creux moulé (2) est conformé en profil d'autocentrage (8) en direction longitudinale au moins par segments dans la zone de l'extrémité de l'armature (5) disposée dans l'espace intérieur (4).

8. Profilé creux moulé et son armature selon l'une quelconque des revendications 1 à 5, **caractérisé en ce que** le profilé creux moulé (2) présente un deuxième évidement (7) qui traverse au moins par zones l'armature (5) s'étendant dans l'espace intérieur (4) du profilé creux moulé (2).

9. Profilé creux moulé et son armature selon l'une quelconque des revendications 1 à 9, **caractérisé en ce que** l'armature (5) est disposée dans le profilé creux moulé (2) de telle façon que le moment maximal du couple résistif de l'armature (5) résiste à la contrainte maximale du profilé creux moulé (2).

10. Profilé creux moulé et son armature selon l'une quelconque des revendications 1 à 9, **caractérisé en ce que** l'armature (5) présente de préférence dans sa section transversale un profil en "I" et **en ce qu'**elle constitue au moins approximativement une traverse centrale du profilé creux moulé (2).

11. Profilé creux moulé et son armature selon l'une quelconque des revendications 1 à 10, **caractérisé en ce que** l'on prévoit plusieurs armatures (5) dans la direction longitudinale du profilé creux moulé (2).
